# EUROPÄISCHE PATENTSCHRIFT

(11) **EP 3 876 371 B1**
(45) Veröffentlichungstag und Bekanntmachung des Hinweises auf die Patenterteilung: **26.11.2025**
(21) Anmeldenummer: 20305235.2
(22) Anmeldetag: 05.03.2020
(51) Int. Cl.: H02G 1/14, H02G 15/22

(54) **ENDVERSCHLUSS FÜR HOCHSPANNUNGSKABEL**
END CLOSURE FOR HIGH VOLTAGE CABLE
FERMETURE D'EXTRÉMITÉ POUR CÂBLES HAUTE TENSION

(43) Veröffentlichungstag der Anmeldung: 08.09.2021
(73) Patentinhaber: Nexans, 92400 Courbevoie (FR)
(72) Erfinder: FROHNE, Christian, 30657 HANNOVER (DE); MIREBEAU, Pierre, 91140 VILLEBON SUR YVETTE (FR); LALLOUET, Nicolas, 62360 BAINCTHUN (FR); EYSSAUTIER, Quentin, 62100 CALAIS (FR); AIT AMAR, Abdellatif, 62730 MARCK (FR)
(74) Vertreter: Acapo Onsagers AS

(56) Entgegenhaltungen:
- EP-A1- 0 015 160
- JP-A- H09 213 147
- US-A- 2 713 081
- US-A- 3 758 699

## Beschreibung

### Gebiet

Die Erfindung betrifft einen Endverschluss für Hochspannungskabel.

### Hintergrund

Die zuverlässige Versorgung mit elektrischer Energie ist für viele Bereiche des privaten und wirtschaftlichen Lebens essentiell. Die Verteilung elektrischer Energie in Stromnetzen erfolgt dabei über Erdkabel und Freileitungen, die elektrische Spannungen in unterschiedlichen Spannungsbereichen führen, üblicherweise grob in Niederspannung, Mittelspannung und Hochspannung eingeteilt. Zwischen den Spannungsbereichen erfolgt eine Spannungswandlung mittels Transformatoren. Das Stromnetz ist in unterschiedliche Bereiche eingeteilt. Jeder Bereich oder Sektor ist mit anderen Bereichen oder Sektoren an einer oder mehreren Stellen verbunden. An den Verbindungsstellen kann bei Störungen in einem Bereich oder Sektor, bspw. bei Kurzschlüssen, der Sektor von den anderen Bereichen abgetrennt werden, so dass eine Beeinträchtigung der Stromversorgung lokal begrenzbar ist.

Die Sektoren oder Bereiche sind über Hochspannungsschaltanlagen schaltbar miteinander verbunden. Bei vielen Hochspannungsschaltanlagen wird die elektrische Energie über Kabel zu den Schaltelementen geführt. Hochspannungskabel können als Ölkabel oder kunststoffisolierte Kabel vorliegen.

Ölkabel sind eine spezielle Bauform von Hochspannungskabeln und werden im Betrieb in ihrem Inneren mit dünnflüssigem Mineralöl auf Druck beaufschlagt. Das Öl hat primär die Aufgabe, Inhomogenitäten in der elektrischen Isolation zwischen Innenleiter und dem metallischen äußeren Schirm auszugleichen. Die Isolation kann bspw. in Form von ölgetränktem Papier ausgeführt sein. Ohne diesen Ausgleich käme es durch die ungleichmäßige Ausführung der Papierschichten, in Kombination mit kleinen Schmutz- oder Lufteinschlüssen, zu Überhöhungen der elektrischen Feldstärke mit Teilentladungen und in Folge zu Durchschlägen, welche die Isolierung zerstören und somit das Kabel unbrauchbar machen würden.

An einem oder beiden Enden von Ölkabeln befinden sich, neben den entsprechen elektrischen Einrichtungen, Druckregeleinrichtungen für das Öl, welche einen konstanten Öldruck im Kabelinneren über die gesamte Strecke gewährleisten. Bei Druckabfall, beispielsweise durch Kabelschäden, muss die Leitung unmittelbar abgeschaltet werden. Es gibt zwei primäre Arten von Ölkabeln:
Niederdruck-Ölkabel sind mit üblicherweise einer Papierisolation versehen, welche bei der Herstellung mit sehr dünnflüssigem Öl getränkt wird. Diese Kabel können als Ein- oder Mehrleiterkabel mit einem äußeren Blei- oder Aluminiummantel, einer Druckumhüllung und Schutzumhüllung gegen mechanische Einwirkung ausgestattet sein. Das dünnflüssige Öl wird im Betrieb in das Innere des Kabels an den Kabelendstellen aus Druckausgleichsgefäßen mit einem Druck von 0,5 bis 3,5 bar zugeführt, um so den Öldruck im Kabelinneren über den vollen Umgebungs- und Betriebstemperaturbereich innerhalb der zulässigen Grenzen zu halten. Hierfür kann bei einadrigen Kabeln der Leiter hohl ausgeführt sein, während bei zwei- oder dreiadrigen Kabeln die Zwickel zwischen den Adern als Ölkanal dienen können.

Hochdruck-Ölkabel können ebenfalls mit einer mit sehr dünnflüssigem Öl getränkten Papierisolation ausgeführt sein, allerdings werden für Dreiphasenwechselstrom drei Leiter mit der Isolierung und einer äußeren elektrischen Schirmung gemeinsam in einem Stahlrohr angeordnet. Dieses Stahlrohr wird nach der Verlegung im Erdreich von den Kabelenden her unter einem Öldruck von etwa 15 bar gehalten.

Kunststoffisolierte Kabel weisen in der Regel eine Isolierung des Innenleiters aus vernetztem Polyethylen auf, das unter Reinraumbedingungen homogen auf den Innenleiter aufgebracht wird. Andere für Hochspannungskabel verwendete Kunststoffe umfassen unter anderem PVC, Ethylen-Propylen-Polymer oder Silikonkautschuk. Auch bei kunststoffisolierten Kabeln ist es von größter Bedeutung, die Isolierung ohne Einschlüsse von Luft, Fremdkörpern oder Verschmutzungen auszuführen, die einen ungleichmäßigen Feldstärkeverlauf bewirken und in der Folge zu einem Versagen der Isolierung führen können.

An den Enden von Hochspannungskabeln muss besonderes Augenmerk auf den Feldstärkeverlauf am und im Isolationsmaterial gelegt werden. Dort, wo die äußere Schirmung des Kabels endet, kommt es zu einer Feldstärkeerhöhung, welche über der Durchschlagsfestigkeit der Luft oder gar des Isolationsmaterials liegen kann. Um die Feldstärke an den Kabelenden kontrolliert auf zulässigen Niveaus zu halten werden spezielle Kabel-Endverschlüsse verwendet, im Folgenden kurz auch als Endverschlüsse bezeichnet.

Endverschlüsse werden vor allem zum Abschluss von Hochspannungskabeln, bspw. an Übergängen von einem Hochspannungskabel auf eine andere Leitungsart, bspw. auf eine Freileitung, oder bei Übergängen von einem Kabel auf ein anderes Bau- oder Anlagenteil verwendet, beispielsweise vom Hochspannungskabel auf einen Transformator oder Trenner.

Endverschlüsse für Hochspannungskabel sind üblicherweise mit einem Isolierfluid gefüllt, das unter allen Betriebsbedingungen eine hohe elektrische Festigkeit aufweisen muss. Zusammen mit einer entsprechenden geometrischen Gestaltung des Endverschlusses überführt das Isolierfluid die hohen elektrischen Feldstärken vom Kabel und den Feldsteuerelementen, die in dem Endverschluss angeordnet sind, kontrolliert in niedrigere Feldstärken, die in dem Endverschlusses und dessen Umgebung zulässig sind.

Als Isolierfluide kommen bspw. Öle und Gase zur Anwendung. Ein in der Hochspannungstechnik häufig verwendetes Gas ist Schwefelhexafluorid, oft auch mit der Summenformel SF6 bezeichnet. Die Durchschlagsfestigkeit von SF6 ist bei Normaldruck fast dreimal so hoch wie in Luft oder Stickstoff. Diese Eigenschaften sowie die geringen dielektrischen Verluste prädestinieren es zur Verwendung als Isoliergas in Koaxialkabeln und gasisolierten Hochfrequenz-Leistungskondensatoren, die damit kleiner gebaut werden können. Als Isolationsgas in elektrischen Schaltanlagen wird es in der Regel unter erhöhtem Druck von 5 bar bis 10 bar gehalten, um die nötige hohe Isolationsfähigkeit sicherzustellen. Der erhöhte Gasdruck reduziert die mittlere Weglänge der freien Elektronen im Gas. Dadurch können Elektronen nicht so stark beschleunigt werden wie bei Normaldruck, denn sie stoßen früher mit den SF6-Molekülen zusammen. Die Wahrscheinlichkeit, dass die Elektronen geladene Ionen erzeugen, wird dadurch reduziert.

Die Eigenschaften des Isolierfluids müssen während der Betriebs-Lebensdauer des Endverschlusses möglichst gleich und auf dem Niveau zu dem Zeitpunkt der Inbetriebnahme bleiben. Ein Eindringen von Feuchtigkeit, bspw. durch Diffusion, in das Innere des Endverschluss kann nicht vollständig ausgeschlossen werden. So steht bspw. bei der Montage des Endverschlusses dessen Inneres zumindest zeitweise mit der umgebenden Atmosphäre in Kontakt, so dass während der ersten Befüllung des Endverschlusses aus der feuchten Umgebungsluft Feuchtigkeit in das Isolierfluid gelangen kann.

Gegenwärtig wird nach dem Einbringen des Isolierfluids der Endverschluss hermetisch versiegelt, und das Isolierfluid verbleibt dauerhaft in dem Endverschluss.

Untersuchungen haben gezeigt, dass trotz aller Maßnahmen der Feuchtigkeitsgehalt in dem Isolierfluid mit der Zeit ansteigt. Dies kann daher rühren, dass die Kabelenden und Endverschlüsse häufig im Freien liegen. Allerdings besteht auch bei mit Gehäusen umschlossenen oder in Gebäuden befindlichen Kabelenden und Endverschlüssen die Gefahr, dass Feuchtigkeit aus der Umgebungsluft durch die Kabelisolierung oder Dichtelemente hindurch in das System diffundiert. Außerdem kann Feuchtigkeit aus Polymermaterialien des Endverschlusses oder in dem Endverschluss aufgenommener Bauteile ausgasen. Die Feuchtigkeit wird von dem Isolierfluid aufgenommen und verschlechtert insbesondere dessen dielektrischen Eigenschaften, so dass die Isolierfähigkeit herabgesetzt wird und die feldsteuernden Eigenschaften verändert werden, was ab einem bestimmten Feuchtigkeitsgehalt zu einem undefinierten und unkontrollierten Anstieg der Feldstärke im Endverschluss, zum Durchschlagen des Isolierfluids und unter Umstanden zum Versagen der Isolierung führen kann.

In Schaltanlagen mit dem prinzipiell ungiftigen SF6-Gas entstehen im Laufe des Betriebes durch Lichtbögen beim Schalten in Kombination mit Verunreinigungen wie bspw. einem geringen Wasseranteil neben dem ungiftigen Tetrafluormethan giftige Fluorid-Verbindungen wie Fluorwasserstoff und Thionylfluorid sowie das hochgiftige Dischwefeldecafluorid. Auch aus diesem Grund ist es wünschenswert, Feuchtigkeit in dem Isolierfluid zu vermeiden.

Eine Trocknung des Isolierfluids bzw. des Innenraums des Endverschlusses, also ein Entfernen von Feuchtigkeit, erfolgt jedoch heutzutage nur bei der Installation bzw. ersten Befüllung des Endverschlusses.

Zwar sind Endverschlüsse für Hochspannungskabel bekannt, bei denen ein in einem Hauptvolumen befindliches Isolieröl mittels einer Pumpe über einen Filter und einen Wärmetauscher umgewälzt wird, bspw. aus der US 3 758 699, jedoch ist der Filter bei einer Regenerierung umständlich handzuhaben und dabei nicht gegenüber der umgebenden Atmosphäre abgeschlossen.

Bei dem aus der US 2 713 081 bekannten Endverschluss für Hochspannungskabel ist ein mit einem Isolieröl gefülltes Volumen des Endverschlusses mit dem ölgefüllten Volumen eines daran angeschlossenen Kabels über eine Verbindungsleitung miteinander verbunden. In der Verbindungsleitung ist ein Filter angeordnet, und die Verbindungsleitung ist beiderseits des Filters absperrbar. Zum Austausch des Filtermaterials muss das Filtergehäuse vor Ort geöffnet werden, und der Inhalt des Filters steht dabei mit der umgebenden Atmosphäre in Verbindung.

Aus der JP H09 213 147 A ist ein Endverschluss für Hochspannungskabel bekannt, bei dem ein feuchtigkeitsabsorbierendes Mittel in dem Hauptvolumen angeordnet ist. Zwar ist eine Pumpe über eine Leitung mit dem Hauptvolumen verbunden und stellt eine Verbindung nach außen her, aber ein Austausch oder eine Regenerierung des Filtermaterials ist bei diesem bekannten Endverschluss ebenfalls nicht möglich.

Hiervon ausgehend hat die vorliegende Erfindung die Aufgabe, einen Endverschluss für ein Hochspannungskabel zu schaffen, der eines oder mehrere der eingangs genannten Probleme überwindet oder zumindest deren Auftreten verzögert bzw. deren Auswirkungen verringert.

### Zusammenfassung der Erfindung

Zur Lösung dieser Aufgabe schlägt die Erfindung nach einem ersten Aspekt einen Hochspannungskabel-Endverschluss mit einem Hauptvolumen und einem Nebenvolumen vor, die mit einem Isolierfluid gefüllt sind, bspw. einem Isoliergas oder einem Isolieröl. Das Hauptvolumen und das Nebenvolumen sind gegenüber der den Hochspannungskabel-Endverschluss umgebenden Atmosphäre abgedichtet. Das Hauptvolumen ist außerdem von dem Nebenvolumen über eine fluiddicht absperrbare, lösbare Verbindung abtrennbar. Dabei bleiben Haupt- und Nebenvolumen von der umgebenden Atmosphäre abgedichtet. In das Nebenvolumen ist ein Trockenmittel eingebracht, welches dem Isolierfluid Feuchtigkeit entzieht. Die Trocknung kann bspw. durch Adsorption erfolgen, wie etwa bei Molekularsieben, oder durch geeignete Gettermaterialien.

Im Betrieb sind die beiden Volumina fluidmäßig miteinander verbunden, und das Isolierfluid kann sich zwischen den Volumina bewegen. Die Bewegung kann bspw. durch thermische Zirkulation oder durch eine mittels eines mechanischen Antriebs unterstützte Zirkulation erfolgen, so dass in dem Isolierfluid enthaltene oder darin eindringende Feuchtigkeit zusammen mit dem Isolierfluid zu dem Trockenmittel gelangt, wo sie dem Isolierfluid entzogen wird. Auch durch Diffusion der in dem Fluid enthaltenen Feuchtigkeit gelangt diese zu und in Kontakt mit dem Trockenmittel, welches dem Fluid die Feuchtigkeit entzieht.

Die Möglichkeit, das Nebenvolumen vom Hauptvolumen zu trennen, und dabei das Haupt- und das Nebenvolumen abgeschlossen zu halten, ermöglicht eine einfachere Handhabung bei der Erstmontage oder beim Austausch des Trockenmittels. Einerseits muss nur ein im Vergleich zum Hauptvolumen kleines Volumen Isolierfluid am Montageort gehandhabt werden, da das Hauptvolumen bereits mit dem Isolierfluid gefüllt sein kann bzw. gefüllt bleiben kann. Andererseits kann im ungünstigsten Fall nur die vergleichsweise kleine in der Trennstelle des Anschlusses zum Nebenvolumen enthaltene Menge Isolierfluid austreten. Zudem wird der Druck des Isolierfluids in dem Hauptvolumen auch bei getrennter Verbindung erhalten.

Bei einer nicht zur Erfindung gehörenden Ausgestaltung des Hochspannungskabel-Endverschlusses umfasst die fluiddicht absperrbare, lösbare Verbindung ein erstes Absperrventil zum Hauptvolumen und eine Trennstelle zum Nebenvolumen. Über das Absperrventil kann das Hauptvolumen geschlossen werden, bevor das Nebenvolumen an der Trennstelle von dem Hauptvolumen getrennt wird. Bei dieser Ausgestaltung ist es bspw. möglich, das in das Nebenvolumen eingebrachte Trockenmittel auszutauschen, bspw. weil dessen Funktion durch Sättigung nachlässt oder beeinträchtigt ist, ohne das in dem Hauptvolumen befindliche Isolierfluid bei der Trennung der beiden Volumina abfließen zu lassen. Beeinträchtigungen oder Nachlassen der Funktion des Trockenmittels können durch entsprechende Sensoren im Nebenvolumen oder Hauptvolumen erkannt werden. Es sind auch Trockenmittel bekannt, die bei zunehmender Sättigung mit Feuchtigkeit ihre Farbe ändern. In diesen Fällen kann in dem Nebenvolumen bspw. ein Sichtfenster vorgesehen sein, das eine Sichtkontrolle des darin angeordneten Trockenmittels ermöglicht. Wenn eine über das zulässige Maß hinausgehende Sättigung des Trockenmittels erkannt wird, kann ein Tausch des Trockenmittels geplant werden, z.B. bei einer ohnehin bevorstehenden Abschaltung oder Wartung.

Bei einer erfindungsgemäßen Abwandlung der vorstehend genannten Ausgestaltung des Hochspannungskabel-Endverschlusses umfasst die die fluiddicht absperrbare, lösbare Verbindung ein zweites Absperrventil zwischen der Trennstelle und dem Nebenvolumen. Bei dieser Ausgestaltung ist es möglich, auch das Nebenvolumen im vom Hauptvolumen getrennten Zustand gegenüber der Umwelt abzuschließen, um so bspw. eine einfachere Handhabung zu erreichen, oder ein vorgefülltes Nebenvolumen mit dem Hauptvolumen zu verbinden. Wenn ein vorgefülltes Nebenvolumen mit dem Hauptvolumen verbunden wird, kann, wenn überhaupt, nur eine kleine Menge Luft und darin enthaltene Feuchtigkeit aus der Umgebungsatmosphäre in das geschlossene System gelingen, so dass die auf diesem Wege in das System eindringende Feuchtigkeitsmenge verringert wird. Außerdem kann bei der Trennung von Haupt- und Nebenvolumen nur sehr wenig Isolierfluid austreten und in die Umwelt gelangen. Wie bei den anderen Ausgestaltungen ist auch bei dieser Ausgestaltung ein Austausch des Nebenvolumens bzw. des darin enthaltenen Trockenmittels auf einfache Weise möglich.

Die vorstehend beschriebene Ausgestaltung kann zusätzlich einen außenseitig des ersten Absperrventils, in einem durch die Verbindung von Hauptvolumen und Nebenvolumen gebildeten Verbindungsvolumen angeordneten, fluiddicht absperrbaren Anschluss umfassen. Dieser Anschluss kann dazu genutzt werden, zumindest das Verbindungsvolumen zu evakuieren und/oder zu befüllen, z.B. mit dem Isolierfluid. Falls kein zweites Absperrventil vorgesehen ist, kann über den Anschluss auch das Nebenvolumen evakuiert und/oder befüllt werden.

Die Möglichkeit des Befüllens oder Evakuierens des Nebenvolumens und ggf. des Verbindungsvolumens nach der Verbindung mit bzw. vor der Trennung von dem Hauptvolumen kann bei der Erstmontage oder bei dem Austausch des Trockenmittels genutzt werden und kann die Handhabung erheblich erleichtern. Außerdem kann so sichergestellt werden, dass, wenn überhaupt, nur vernachlässigbar kleine Mengen des Isolierfluids in die Umgebung gelangen. Insbesondere bei SF6 als Isolierfluid ist dies vorteilhaft, weil SF6 ein hochpotentes Treibhausgas ist, das eine sehr viel größere klimaschädigende Wirkung als CO2 aufweist.

Wenn das Nebenvolumen erfindungsgemäß mit einem zweiten Absperrventil von der Umgebung abgesperrt ist, kann bspw. ein an dem Hauptvolumen montiertes Nebenvolumen, dessen Trockenmittel mit Feuchtigkeit gesättigt ist oder eine verringerte Wirkung aufweist einfach gegen ein mit einem neuen Trockenmittel versehenes und mit dem Isolierfluid vorgefülltes Nebenvolumen ausgetauscht werden. Ein aufwendiges Befüllen des ausgetauschten Nebenvolumens erübrigt sich hierbei.

In der Verbindung zwischen Hauptvolumen und Nebenvolumen kann sich bei Ausführungen des Hochspannungskabel-Endverschlusses ein Verbindungsvolumen ergeben, welches nicht von der in der Umgebung befindlichen Atmosphäre absperrbar ist. Da dieses Volumen gegenüber den anderen Systemvolumina jedoch vergleichsweise klein ist, kann die Menge Umgebungsluft im System vernachlässigt werden. Grundsätzlich ist es jedoch möglich, über einen bei einigen Ausführungsformen vorgesehenen Anschluss nicht abgesperrte Volumina zunächst zumindest teilweise zu evakuieren, bevor die Absperrventile geöffnet werden. Natürlich kann auch, ggf. nach der Evakuierung, eine Befüllung mit Isolierfluid erfolgen.

Ein nicht zu der Erfindung gehörendes Verfahren zur Montage eines Hochspannungskabel-Endverschlusses gemäß der vorstehend genannten Ausgestaltung umfasst das Bereitstellen eines Hauptvolumens und eines Nebenvolumens, in dem ein Trockenmittel angeordnet ist bzw. in das ein Trockenmittel eingebracht ist. Die beiden Volumina werden sodann fluiddicht miteinander verbunden, und das erste Absperrventil wird geöffnet.

Wenn das Hauptvolumen bereits mit dem Isolierfluid gefüllt ist, das Nebenvolumen jedoch nicht, kann nach dem Öffnen des ersten Absperrventils Isolierfluid aus dem Hauptvolumen in das Nebenvolumen fließen. Die in dem Nebenvolumen befindliche Umgebungsluft vermischt sich mit dem Isolierfluid, was bei einem im Vergleich zum Hauptvolumen sehr kleinen Nebenvolumen unproblematisch sein kann.

Wenn das Nebenvolumen bereits mit dem Isolierfluid gefüllt ist, verringert sich die Menge der Umgebungsluft, die bei der Montage in das System gelangt noch weiter.

Bei der erfindungsgemäßen Ausführung des Hochspannungskabel-Endverschlusses, bei denen das Nebenvolumen über ein zweites Absperrventil verschließbar ist, kann bei geschlossenem zweiten Absperrventil bei der Handhabung des Nebenvolumens während der Montage kein Isolierfluid aus dem Nebenvolumen austreten, und es kann keine Umgebungsluft hineingelangen. Bei diesen Ausführungen umfasst das Montageverfahren außerdem das Öffnen des zweiten Absperrventils nach dem fluiddichten Verbinden.

Bei Ausführungen des Hochspannungskabel-Endverschlusses, bei denen ein fluiddicht absperrbarer Anschluss in der Verbindung von Hauptvolumen und Nebenvolumen vorgesehen ist, sind je nach Ausführung des Hochspannungskabel-Endverschlusses weitere Verfahrensschritte möglich.

Wenn das Hauptvolumen und/oder das Nebenvolumen nach dem fluiddichten Verbinden nicht mit dem Isolierfluid gefüllt sind, kann über den fluiddicht absperrbaren Anschluss in der Verbindung das Isolierfluid in die nicht mit dem Isolierfluid befüllten Volumina des Systems eingebracht werden. Zusätzlich können die nicht mit dem Isolierfluid befüllten Volumina des Systems zuvor zumindest teilweise evakuiert werden. Ähnliches gilt, wenn nur ein nicht vermeidbares, kleines Verbindungsvolumen zwischen den beiden Absperrventilen nicht mit dem Isolierfluid gefüllt ist. Das Verfahren umfasst in diesen Fällen die zusätzlichen Schritte des Öffnens des Anschlusses, des Befüllen der nicht mit dem Isolierfluid befüllten Volumina, und das Schließen des Anschlusses.

Entsprechend umfasst ein erfindungsgemäßes Verfahren zum Austausch eines Nebenvolumens bzw. eines darin eingebrachten Trockenmittels eines Hochspannungskabel-Endverschlusses gemäß der vorstehend genannten Ausgestaltungen das Schließen des ersten und des zweiten Absperrventils, gefolgt vom Trennen des Nebenvolumens von dem Hauptvolumen. Anschließend kann das Trockenmittel in dem Nebenvolumen ausgetauscht werden, oder es wird ein Ersatz-Nebenvolumen mit darin eingebrachtem Trockenmittel bereitgestellt. Das Nebenvolumen mit dem ausgetauschten Trockenmittel oder das Ersatz-Nebenvolumen wird sodann fluiddicht mit dem Hauptvolumen verbunden, und das erste und zweite Absperrventil werden geöffnet.

Die zusätzlichen Verfahrensschritte für den Fall, dass ein fluiddicht absperrbarer Anschluss in der Verbindung vorgesehen ist, entsprechen denen bei der Montage und werden an dieser Stelle nicht wiederholt..

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1: eine schematische Darstellung einer nicht zu der Erfindung gehörenden Ausführungsform eines Hochspannungskabel-Endverschlusses,
- Fig. 2: eine schematische Darstellung einer Ausführungsform eines erfindungsgemäßen Hochspannungskabel-Endverschlusses,
- Fig 3: ein Flussdiagramm eines nicht zu der Erfindung gehörenden exemplarischen Verfahrens zur Montage eines Hochspannungskabel-Endverschlusses, und
- Fig. 4: ein Flussdiagramm eines exemplarischen Verfahrens zum Austausch eines Nebenvolumens oder eines darin eingebrachten Trockenmittels eines erfindungsgemäßen Hochspannungskabel-Endverschlusses.

Gleiche oder ähnliche Elemente sind in den Figuren mit gleichen oder ähnlichen Bezugszeichen versehen.

### Ausführungsbeispiel

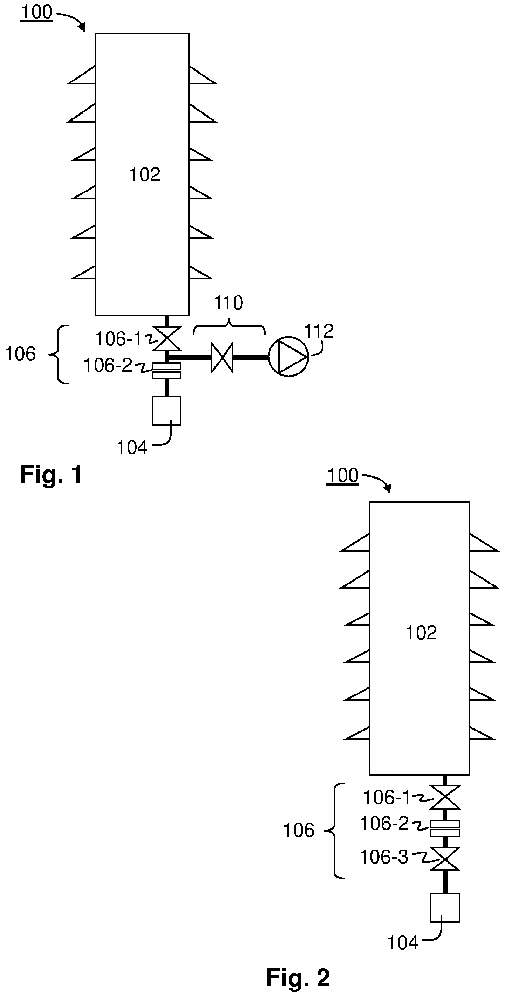

Figur 1 zeigt eine schematische Darstellung einer nicht zu der Erfindung gehörenden Ausführungsform eines Hochspannungskabel-Endverschlusses 100. Ein Nebenvolumen 104 ist über eine fluiddicht absperrbare, lösbare Verbindung 106 mit einem Hauptvolumen 102 verbunden, dargestellt durch das Rechteck mit den stilisierten Rippen zur Verlängerung der Kriechstrecke. Die lösbare Verbindung 106 umfasst bei dieser exemplarischen Darstellung ein erstes Absperrventil 106-1 und eine Trennstelle 106-2. Das erste Absperrventil 106-1 sperrt das Hauptvolumen 102 gegenüber der Trennstelle 106-2 ab.

In der Figur 1 ist außerdem ein bei einer oder mehreren Ausführungen des erfindungsgemäßen Hochspannungskabel-Endverschlusses vorgesehener fluiddicht absperrbarer Anschluss 110 dargestellt, in der Figur durch ein Absperrventil repräsentiert. An den fluiddicht absperrbaren Anschluss kann bspw. eine Pumpe 112 angeschlossen sein, mittels derer das Nebenvolumen 104 und ggf. das Hauptvolumen 102 sowie ein in der Verbindung gebildetes Verbindungsvolumen evakuiert und/oder mit einem Isolierfluid befüllt werden kann.

Figur 2 zeigt eine schematische Darstellung einer Ausführungsform eines erfindungsgemäßen Hochspannungskabel-Endverschlusses 100. Wie bei dem mit Bezug auf Figur 1 beschriebenen Hochspannungskabel-Endverschluss sind ein Hauptvolumen 102 und ein Nebenvolumen 104 über eine fluiddicht absperrbare, lösbare Verbindung 106 verbunden. Im Unterschied zu dem zuvor beschriebenen Hochspannungskabel-Endverschluss ist in der fluiddicht absperrbaren, lösbaren Verbindung 106 ein zweites Absperrventil 106-3 vorgesehen, welches das Nebenvolumen 104 gegenüber der Trennstelle absperrt. Bei dieser Ausführung kann bspw., wie weiter oben beschrieben, das Nebenvolumen ausgetauscht werden, ohne dass eine Füllung mit Isolierfluid zuvor entfernt oder nach der Montage aufgefüllt werden müsste.

Eine mit der in Figur 2 gezeigten Ausführungsform verwandte, nicht dargestellte Ausführungsform umfasst einen fluiddicht absperrbaren Anschluss 110 mit einem zweiten Absperrventil, wodurch sich weitere Möglichkeiten der Handhabung bei der Montage und dem Austausch des Trockenmittels eröffnen.

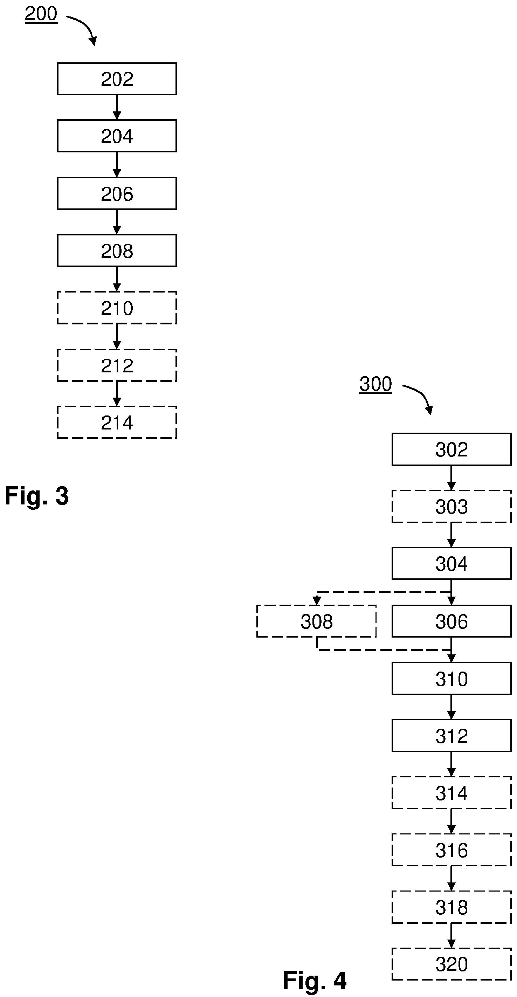

Figur 3 zeigt ein Flussdiagramm eines nicht zu der Erfindung gehörenden exemplarischen Verfahrens 200 zur Montage eines Hochspannungskabel-Endverschlusses 100. In Schritt 202 wird ein Hauptvolumen 102, und in Schritt 204 wird ein Nebenvolumen 104 bereitgestellt, in welchem ein Trockenmittel angeordnet ist. Haupt- und Nebenvolumen 102, 104 werden in Schritt 206 fluiddicht miteinander verbunden, und in Schritt 208 wird das erste Absperrventil 106-1 geöffnet.

Bei einer Variante des Verfahrens 200, die bspw. genutzt werden kann, wenn außer dem ersten Absperrventil 106-1 zum Hauptvolumen 102 ein zweites Absperrventil 106-3 an dem Nebenvolumen 104 vorgesehen ist, kann das Verfahren außerdem den Schritt 210 umfassen, in dem das zweite Absperrventil 106-3 geöffnet wird. Schritt 210 erfolgt nach dem fluiddichten Verbinden in Schritt 206 und kann vor oder nach Schritt 208 ausgeführt werden.

Bei einer weiteren Variante des Verfahrens 200, die bspw. genutzt werden kann, wenn ein fluiddicht absperrbarer Anschluss 110 in der Verbindung 106 von Hauptvolumen 102 und Nebenvolumen 104 vorgesehen ist, kann das Verfahren außerdem die Schritte 210, 212 und 214 umfassen. In Schritt 210, der nach dem fluiddichten Verbinden in Schritt 206 ausgeführt wird, wird der Anschluss 110 geöffnet. Nachfolgend wird in Schritt 212 ein in der Verbindung 106 gebildetes Verbindungsvolumens und/oder das Nebenvolumen 104 über den geöffneten Anschluss 110 mit dem Isolierfluid befüllt. Schließlich wird in Schritt 212 der Anschluss 110 wieder geschlossen. Die Reihenfolge der zusätzlichen Schritte bei dieser Variante für den Fall, dass ein zweites Absperrventil 106-3 in der Verbindung 106 vorgesehen ist, ergeben sich für den Fachmann in naheliegender Weise.

Figur 4 zeigt ein Flussdiagramm eines exemplarischen Verfahrens 300 zum Austausch eines Nebenvolumens 104 oder eines darin eingebrachten Trockenmittels eines Hochspannungskabel-Endverschlusses 100. Ausgehend von einem System, in dem ein Hauptvolumen 102 mit einem Nebenvolumen 104 über eine fluiddichte Verbindung 106 verbunden ist, umfasst das Verfahren zunächst den Schritt 302, in dem das erste Absperrventil 106-1 geschlossen wird. Erst danach wird in Schritt 304 das Nebenvolumen 104 von dem Hauptvolumen 102 getrennt, und in Schritt 306 das Trockenmittel in dem nunmehr abgetrennten Nebenvolumen 104 ausgetauscht. Alternativ kann in Schritt 308 ein Ersatz-Nebenvolumen 104 bereitgestellt werden. Anschließend wird in Schritt 310 das Nebenvolumen 104 mit dem Hauptvolumen 102 wieder fluiddicht verbunden, und das erste Absperrventil 106-1 in Schritt 312 geöffnet.

Bei einer erfindungsgemäßen Variante des Verfahrens 300, die genutzt werden kann, wenn außer dem ersten Absperrventil 106-1 zum Hauptvolumen 102 ein zweites Absperrventil 106-3 an dem Nebenvolumen 104 vorgesehen ist, kann das Verfahren außerdem den Schritt 303 umfassen, in dem das zweite Absperrventil 106-3 geschlossen wird. Schritt 303 erfolgt vor dem Trennen in Schritt 304 und kann vor oder nach Schritt 302 ausgeführt werden. Diese Variante umfasst außerdem den Schritt 314, in dem das zweite Absperrventil 106-3 geöffnet wird. Schritt 314 erfolgt nach dem fluiddichten Verbinden in Schritt 310 und kann vor oder nach Schritt 312 ausgeführt werden.

Bei einer weiteren Variante des Verfahrens 300, die bspw. genutzt werden kann, wenn ein fluiddicht absperrbarer Anschluss 110 in der Verbindung 106 von Hauptvolumen 102 und Nebenvolumen 104 vorgesehen ist, kann das Verfahren außerdem die Schritte 316, 318 und 320 umfassen. In Schritt 316, der nach dem fluiddichten Verbinden in Schritt 310 ausgeführt wird, wird der Anschluss 110 geöffnet. Nachfolgend wird in Schritt 318 ein in der Verbindung 106 gebildetes Verbindungsvolumens und/oder das Nebenvolumen 104 über den geöffneten Anschluss 110 mit dem Isolierfluid befüllt. Schließlich wird in Schritt 320 der Anschluss 110 wieder geschlossen. Die Reihenfolge der zusätzlichen Schritte bei dieser Variante für den Fall, dass ein zweites Absperrventil 106-3 in der Verbindung 106 vorgesehen ist, ergeben sich für den Fachmann in naheliegender Weise.

### Bezugszeichenliste

- 100: Hochspannungskabel-Endverschluss
- 102: Hauptvolumen
- 104: Nebenvolumen
- 106: lösbare Verbindung
- 106-1: erstes Absperrventil
- 106-2: Trennstelle
- 106-3: zweites Absperrventil
- 110: Anschluss
- 112: Pumpe
- 200: Montageverfahren
- 202-214: Verfahrensschritte
- 300: Austauschverfahren
- 302-31: Verfahrensschritte

## Patentansprüche

1. Hochspannungskabel-Endverschluss (100) mit einem Hauptvolumen (102) und einem damit fluidisch verbundenen Nebenvolumen (104), die mit einem Isolierfluid gefüllt sind, wobei das Hauptvolumen und das Nebenvolumen gegenüber der den Hochspannungskabel-Endverschluss (100) umgebenden Atmosphäre abgedichtet sind, wobei in das Nebenvolumen (104) ein Trockenmittel eingebracht ist, wobei das Nebenvolumen (104) von dem Hauptvolumen (102) über eine fluiddicht absperrbare, lösbare Verbindung (106) abtrennbar ist, wobei die fluiddicht absperrbare, lösbare Verbindung (106) ein erstes Absperrventil (106-1) zum Hauptvolumen (102) und eine Trennstelle (106-2) zum Nebenvolumen (104) umfasst, und wobei die fluiddicht absperrbare, lösbare Verbindung (106) zwischen der Trennstelle (106-2) und dem Nebenvolumen (104) ein zweites Absperrventil (106-3) umfasst, mit welchem das Nebenvolumen (104) im vom Hauptvolumen abgetrennten Zustand gegenüber der umgebenden Atmosphäre abgedichtet ist.

2. Hochspannungskabel-Endverschluss (100) nach Anspruch 1, wobei außenseitig des ersten Absperrventils (106-1) in der Verbindung von Hauptvolumen (102) und Nebenvolumen (104) ein Verbindungsvolumen gebildet ist, und wobei in der Verbindung ein fluiddicht absperrbarer Anschluss (110) vorgesehen ist, der zum Evakuieren oder Befüllen zumindest des Verbindungsvolumens eingerichtet ist.

3. Verfahren (300) zum Austausch eines Nebenvolumens (104) bzw. eines darin eingebrachten Trockenmittels eines mit einem Isolierfluid gefüllten Hochspannungskabel-Endverschlusses (100) nach Anspruch 1 oder 2, umfassend die folgenden Schritte in dieser Reihenfolge:
- Schließen (302) des ersten und des zweiten Absperrventils (1ß6-1. 106-3),
- Trennen (304) des Nebenvolumens (104) von dem Hauptvolumen (102) an der Trennstelle (106-2),
- Austausch (306) des Trockenmittels in dem abgetrennten Nebenvolumen (104) oder Bereitstellen (308) eines Ersatz-Nebenvolumens (104) mit darin eingebrachtem Trockenmittel,
- fluiddichtes Verbinden (310) des Nebenvolumens (104) mit dem Hauptvolumen (102) an der Trennstelle (106-2), und
- Öffnen (312) des ersten und des zweiten Absperrventils (106-1, 106-3).

4. Verfahren (300) nach Anspruch 3, nach dem fluiddichten Verbinden (310) des Nebenvolumens (104) mit dem Hauptvolumen (102) außerdem umfassend, wenn ein fluiddicht absperrbarer Anschluss (110) in der Verbindung von Hauptvolumen (102) und Nebenvolumen (104) vorgesehen ist:
- Öffnen (316) des Anschlusses (110),
- Befüllen (318) des Verbindungsvolumens und/oder des Nebenvolumens (104) mit dem Isolierfluid, und
- Schließen (320) des Anschlusses (110).

## Claims

1. High-voltage cable termination (100) with a main volume (102) and an auxiliary volume (104) fluidically connected thereto, which are filled with an insulating fluid, the main volume and the auxiliary volume being sealed against the atmosphere surrounding the high-voltage cable termination (100), wherein a desiccant is introduced into the auxiliary volume (104), wherein the auxiliary volume (104) is separable from the main volume (102) via a fluid-tight closable, detachable connection (106), wherein the fluid-tight closable, detachable connection (106) comprises a first shut-off valve (106-1) toward the main volume (102) and a separating point (106-2) toward the auxiliary volume (104), and wherein the fluid-tight closable, detachable connection (106) comprises, between the separating point (106-2) and the auxiliary volume (104), a second shut-off valve (106-3), by means of which the auxiliary volume (104) is sealed against the surrounding atmosphere in the state separated from the main volume.

2. High-voltage cable termination (100) according to claim 1, wherein on the outside of the first shut-off valve (106-1), in the connection between the main volume (102) and the auxiliary volume (104), a connecting volume is formed, and wherein in the connection a fluid-tight closable port (110) is provided, which is configured for evacuating or filling at least the connecting volume.

3. Method (300) for replacing an auxiliary volume (104) or a desiccant introduced therein of a high-voltage cable termination (100) filled with an insulating fluid according to claim 1 or 2, comprising the following steps in this order:
- closing (302) the first and the second shut-off valves (106-1, 106-3),
- separating (304) the auxiliary volume (104) from the main volume (102) at the separating point (106-2),
- replacing (306) the desiccant in the separated auxiliary volume (104) or providing (308) a replacement auxiliary volume (104) with a desiccant introduced therein,
- fluid-tight connecting (310) the auxiliary volume (104) with the main volume (102) at the separating point (106-2), and
- opening (312) the first and the second shut-off valves (106-1, 106-3).

4. Method (300) according to claim 3, after the fluid-tight connecting (310) of the auxiliary volume (104) with the main volume (102) further comprising, if a fluid-tight closable port (110) is provided in the connection between the main volume (102) and the auxiliary volume (104):
- opening (316) the port (110),
- filling (318) the connecting volume and/or the auxiliary volume (104) with the insulating fluid, and
- closing (320) the port (110).

## Revendications

1. Terminaison de câble haute tension (100) comprenant un volume principal (102) et un volume secondaire (104) relié de manière fluidique à celui-ci, qui sont remplis d'un fluide isolant, le volume principal et le le volume econdaire sont étanches par rapport à l'atmosphère entourant le bouchon d'extrémité de câble haute tension (100), un dessiccant étant introduit dans le volume secondaire (104), le volume secondaire (104) pouvant être séparé du volume principal (102) par une connexion détachable pouvant être fermée de manière étanche aux fluides (106) , la connexion détachable pouvant être fermée de manière étanche aux fluides (106) comprend une première vanne d'arrêt (106-1) vers le volume principal (102) et un point de séparation (106-2) vers le volume secondaire (104), et la connexion détachable pouvant être fermée de manière étanche aux fluides (106) comprend, entre le point de séparation (106-2) et le volume secondaire (104) comprend une deuxième soupape d'arrêt (106-3) avec laquelle le volume secondaire (104) est isolé de l'atmosphère ambiante à l'état séparé du volume principal

2. Terminaison de câble haute tension (100) selon la revendication 1, dans laquelle un volume de raccordement est formé à l'extérieur de la première soupape d'arrêt (106-1) dans la jonction entre le volume principal (102) et le volume secondaire (104), et un raccord (110) pouvant être fermé de manière étanche aux fluides étant prévu dans la jonction, lequel est conçu pour évacuer ou remplir au moins le volume de raccordement.

3. Procédé (300) pour remplacer un volume secondaire (104) ou un dessiccant introduit dans celui-ci d'une terminaison de câble haute tension (100) remplie d'un fluide isolant selon la revendication 1 ou 2, comprenant les étapes suivantes dans cet ordre:
- fermeture (302) des première et deuxième vannes d'arrêt (166-1. 106-3);
- séparation (304) du volume secondaire (104) du volume principal (102) au niveau du point de séparation (106-2);
- remplacement (306) du dessiccant dans le volume secondaire séparé (104) ou mise à disposition (308) d'un volume secondaire de remplacement (104) contenant du dessiccant,
- raccordement étanche aux fluides (310) du volume secondaire (104) au volume principal (102) au niveau du point de séparation (106-2), et
- ouverture (312) des première et deuxième vannes d'arrêt (106-1, 106-3).

4. Procédé (300) selon la revendication 3, comprenant en outre, après la connexion étanche aux fluides (310) du volume secondaire (104) au volume principal (102), lorsqu'un raccord (110) pouvant être fermé de manière étanche aux fluides est prévu dans la connexion entre le volume principal (102) et le volume secondaire (104) :
- l'ouverture (316) du raccord (110),
- le remplissage (318) du volume de raccordement et/ou du volume secondaire (104) avec le fluide isolant, et
- la fermeture (320) du raccord (110).
